# EUROPÄISCHE PATENTANMELDUNG

(11) **EP 2 927 725 A2**
(43) Veröffentlichungstag der Anmeldung: **07.10.2015**
(21) Anmeldenummer: 15450010.2
(22) Anmeldetag: 10.03.2015
(51) Int. Cl.: G02B 7/00, G02B 7/182

(54) **Positioniereinrichtung für Raumfahrtanwendungen**

(30) Priorität: 11.03.2014 AT 1772014
(71) Anmelder: RUAG Space GmbH, 1120 Wien (AT)
(72) Erfinder: Neugebauer, Christian, A-1230 Wien (AT); Janu, Paul, A-1030 Wien (AT)
(74) Vertreter: Keschmann, Marc

(57) **Zusammenfassung**

Positioniereinrichtung für Raumfahrtanwendungen umfassend ein stationäres Element (2,22), ein relativ dazu linear verlagerbares Element (4,23) und eine Linearführung zum translatorischen Führen des verlagerbaren Elements (4,23), wobei die Linearführung wenigstens ein das verlagerbare (4,23) und das stationäre (2,22) Element miteinander verbindendes Verbindungselement (7,8,24,25) aufweist, das einerseits mit dem verlagerbaren Element (4,23) und andererseits mit dem stationären (2,22) Element über ein als Materialverjüngung ausgebildetes, einen Freiheitsgrad aufweisendes Gelenk einstückig verbunden ist, wobei ein Aktuator zum Antreiben des verlagerbaren Elements (4,23) vorgesehen ist, der über ein Untersetzungsgetriebe mit dem verlagerbaren Element (4,23) zusammenwirkt, dadurch gekennzeichnet, dass das Untersetzungsgetriebe wenigstens eine erste Untersetzungsstufe und eine zweite Untersetzungsstufe umfasst, wobei die zweite Untersetzungsstufe einen schwenkbaren Hebel (13,33) umfasst.

## Beschreibung

Die Erfindung betrifft eine Positioniereinrichtung für Raumfahrtanwendungen umfassend ein stationäres Element, ein relativ dazu linear verlagerbares Element und eine Linearführung zum translatorischen Führen des verlagerbaren Elements, wobei die Linearführung wenigstens ein das verlagerbare und das stationäre Element miteinander verbindendes Verbindungselement aufweist, das einerseits mit dem verlagerbaren Element und andererseits mit dem stationären Element über ein als Materialverjüngung ausgebildetes, einen Freiheitsgrad aufweisendes Gelenk einstückig verbunden ist, wobei ein Aktuator zum Antreiben des verlagerbaren Elements vorgesehen ist, der über ein Untersetzungsgetriebe mit dem verlagerbaren Element zusammenwirkt.

Eine derartige Positioniereinrichtung kann zur Feinpositionierung von auf Raumflugkörpern angebrachten Elementen eingesetzt werden. Die Positioniereinrichtung ist insbesondere dann erforderlich, wenn die Positionen von Elementen, wie zum Beispiel Spiegeln optischer Instrumente, nicht bereits am Boden exakt eingerichtet werden können oder wenn die Fähigkeit zur Rekonfiguration des Systems im Orbit benötigt wird. Besonders vorteilhaft kann die Feinpositionierung für einen Fokussier-Mechanismus eines optischen Instruments zum Einsatz gelangen.

Feinpositioniereinrichtungen können hierbei einachsig oder mehrachsig, linear und/oder rotatorisch arbeiten.

Eine Positioniereinrichtung der eingangs genannten Art ist zum Beispiel in der US 5969892 beschrieben und soll zur Feineinstellung der Spiegelposition beim geplanten James Webb Teleskop verwendet werden. Das stationäre Element und das verlagerbare Element sind dabei durch Kniehebel miteinander verbunden. Die Konstruktion zeichnet sich durch eine hohe Genauigkeit der Feinpositionierung aus, weist jedoch den Nachteil der nicht ausreichenden Übertragung von Querkräften auf.

Aus dem Stand der Technik ist eine Vielzahl von Konstruktionen zur Feinpositionierung für Raumfahrtanwendungen bekannt. Weit verbreitet ist beispielsweise die Verwendung von Spindeltrieben. Der Antrieb erfolgt beispielweise durch eine direkt angetriebene Kugelumlaufspindel, wobei die Geradeführung durch Rollen auf einem Schienensystem erfolgt. Nachteilig sind die geringe Auflösung, das Umkehrspiel, sowie die Gefahr von Stick-Slip-Effekten im Spindeltrieb. Bei Spindeltrieben mit flexibler Struktur (z.B. Gaia Teleskop - M2 Mirror Mechanism) sind das schlechte Reib- und Verschleißverhalten des Spindeltriebs aufgrund der translatorischen Bewegungen innerhalb des Spindeltriebs und die damit verbundene geringe Lebensdauer nachteilig. Nachteilig ist weiters der begrenzte Hub, der durch die Deformationsmöglichkeit der flexiblen Struktur begrenzt ist.

Alternativ zu Spindeltrieben werden Exzenterantriebe verwendet, z.B. Exzentertriebe mit federnd gelagertem Tisch. Nachteilig ist hier jedoch, dass sich Ungenauigkeiten der Kugellager im Antrieb direkt auf die Verstellgenauigkeit auswirken. Die Verstellgenauigkeit ist identisch mit der radialen Genauigkeit der Kugellager.

An eine Feinpositioniereinrichtung für Raumfahrtanwendungen werden folgende Anforderungen gestellt:
- Hochgenaue Verstellmöglichkeit durch elektrischen Antrieb im sub-Mikrometer / sub-Winkelsekunden - Bereich
- Halten und wiederholbares Erreichen von zuvor angefahrenen Positionen mit hoher Genauigkeit
- Halten der Positionen unter Startlast des Satelliten
- Halten der Positionen ohne elektrische Leistungsaufnahme
- keine Einschränkungen möglicher Positionen der Feinpositioniereinrichtung während des Starts des Satelliten
- präzise Indikation von Referenzpositionen durch elektrische Kontakte
- geringe Thermalverformung
- geringe Masse
- hohe Steifigkeit und damit hohe Eigenfrequenz
- geringe durch Temperaturänderung hervorgerufene Kraft- und Momenteneinleitung in die Montagefläche, typischerweise eine optische Bank
- Verwendung von für die Raumfahrt zugelassenen Materialien
- geringe Fertigungskosten
- die für die Herstellung verwendeten Prozesse müssen beherrscht und prüfbar sein
- die mechanischen und elektrischen Sicherheiten müssen mit etablierten Berechnungsmethoden nachweisbar sein.

Die vorliegende Erfindung zielt darauf ab, den genannten Anforderungen möglichst vollständig Rechnung zu tragen.

Zur Lösung dieser Aufgabe ist die Positioniereinrichtung der eingangs genannten Art erfindungsgemäß derart weitergebildet, dass das Untersetzungsgetriebe wenigstens eine erste Untersetzungsstufe und eine zweite Untersetzungsstufe umfasst, wobei die zweite Untersetzungsstufe einen schwenkbaren Hebel umfasst. Auf Grund der wenigstens zweistufigen Untersetzung wird eine hochgenaue Verstellmöglichkeit geschaffen, wobei der Aktuator bevorzugt von einem elektrischen Motor, insbesondere Schrittmotor gebildet wird. Die Schrittweite des Schrittmotors wird zunächst durch die erste Untersetzungsstufe reduziert und auf den schwenkbaren Hebel der zweiten Untersetzungsstufe übertragen, der die Schrittweite abermals um das Verhältnis seiner Hebellängen um den Drehpunkt reduziert. Dadurch gelingt ein Antrieb im sub-Mikrometer / sub-Winkelsekunden - Bereich.

Die unvermeidlichen Genauigkeitsabweichungen von ggf. im Untersetzungsgetriebe vorhandenen Kugellagern wirken sich nur im Verhältnis der Hebellängen des Hebels auf die Genauigkeit der Feinpositioniereinrichtung aus.

Die erfindungsgemäße Ausbildung ermöglicht weiters das Halten der Positionen unter der Startlast des Raumflugkörpers, insbesondere Satelliten. Beim Start wirken hohe dynamischen Lasten in Verstellrichtung der Feinpositioniereinrichtung, die über die zwei Stufen des Untersetzungsgetriebes auf den Antriebsmotor übertragen werden. Dabei reduziert das Untersetzungsgetriebe das notwendige Haltemoment unter das vorhandene Haltemoment des Antriebsmotors, sodass keine weitere Vorrichtung zum Halten der Position unter Startlast des Satelliten notwendig ist.

In ähnlicher Weise bewirkt das Untersetzungsgetriebe, dass die von der Positioniereinrichtung eingestellte Position des verlagerbaren Elements ohne elektrische Leistungsaufnahme gehalten werden kann.

Der Hebel ist bevorzugt um einen Punkt verdrehbar ausgeführt und besitzt eine kurze Hebellänge hin zum verlagerbaren Element der Positioniereinrichtung bzw. zur Linearführung und eine lange Hebellänge hin zum Aktuator bzw. zur ersten Untersetzungsstufe des Untersetzunsgetriebes. Der Hebel bewirkt, dass eine am langen Hebelarm aufgebrachte Verschiebung im Verhältnis der Hebellängen gemindert auf das verlagerbare Element der Positioniereinrichtung übertragen wird, und somit eine "feine" Verschiebung der Linearführung bei "grober" Betätigung erfolgt.

Der Hebel ist bevorzugt einteilig gemeinsam mit dem verlagerbaren Element bzw. der Linearführung ausgeführt, wobei das zwischen dem verlagerbaren Element bzw. der Linearführung und dem Hebel ausgebildete Gelenk bevorzugt von einer Materialverjüngung gebildet ist.

Eine bevorzugte Weiterbildung sieht vor, dass die erste Untersetzungsstufe von einem Planetenradgetriebe gebildet ist. Das Untersetzungsverhältnis des Planetenradgetriebes ist hierbei bevorzugt so gewählt, dass das Rückstellmoment aus der Verformung der Linearführung und des Hebels über den Hebel und über das Planetengetriebe auf den Aktuator, insbesondere Schrittmotor mit hohem Haltemoment übertragen wird. Dabei reduziert das Planetengetriebe das notwendige Haltemoment unter das vorhandene Haltemoment des Aktuators, sodass die Position der Feinpositioniereinrichtung stromlos ohne elektrische Leistungsaufnahme gehalten werden kann.

Im Rahmen der Erfindung kann die Linearführung grundsätzlich auf verschiedenste Art und Weise ausgebildet sein, wobei lediglich darauf zu achten ist, dass eine im Wesentlichen translatorische Verlagerung des verlagerbaren Elements gelingt. Die Translationsbewegung muss nicht zwingend gerade sein, sondern darf auch einen Verdrehanteil beinhalten, solange dieser wiederholbar ist. Bevorzugt ist die Ausbildung so getroffen, dass die Linearführung zwei das verlagerbare und das stationäre Element miteinander verbindende Verbindungselemente aufweist, die gemeinsam mit dem verlagerbaren Element und dem stationären Element ein Parallelogramm ausbilden. Das Parallelogramm ist bevorzugt so ausgeführt, dass es verschieblich ist entlang eines linearen Freiheitsgrads, und steif um die übrigen fünf Freiheitsgrade.

Das Parallelogramm ist bevorzugt einteilig ausgeführt, wobei die Gelenke durch Schmalstellen im Material ausgebildet sind.

Bevorzugt ist das Parallelogramm in der unverformten Stellung der Gelenke ein Rechteck. Weiters ist bevorzugt vorgesehen, dass der nutzbare Verfahrweg der Linearführung lediglich auf eine Seite der unverformten Stellung des Parallelogramms gewählt ist. Dadurch ist gewährleistet, das der Antrieb des Parallelogramms ständig im gleichen Drehsinn vorgespannt ist, sodass unvermeidliche Verdrehspiele im Antrieb sich nicht auf die Genauigkeit der Positionierung auswirken. Dies betrifft insbesondere die erste Untersetzungsstufe des Untersetzungsgetriebes, die ständig im gleichen Drehsinn vorgespannt ist, sodass sich ein Getriebeflankenspiel nicht auf die Genauigkeit der Feinpositioniereinrichtung auswirkt.

Alternativ kann der gleiche oder ein ähnlicher Effekt dadurch erreicht werden, dass der Aktuator bzw. der Antrieb mittels einer zusätzlichen Feder vorgespannt ist. Der nutzbare Verfahrweg des Parallelogramms kann dann symmetrisch um die unverformte Stellung des Parallelogramms gewählt werden, und die Biegespannungen im Parallelgramm reduzieren sich auf weniger als die Hälfte bei gleichem Verfahrweg.

Wie bereits erwähnt kann der Hebel einteilig mit dem verlagerbaren Element ausgebildet sein. In diesem Zusammenhang sieht eine bevorzugte Weiterbildung vor, dass der Hebel um ein als Materialverjüngung ausgebildetes Gelenk schwenkbar gelagert ist. In diesem Fall ist das aus Hebel, Linearführung und verlagerbarem Element bestehende System einstückig ausgebildet. Eine bevorzuge Weiterbildung sieht in diesem Zusammenhang vor, dass die Linearführung und der Hebel monolithisch aus einem Stück Rohmaterial bevorzugt durch Fräsen und Drahterodieren hergestellt sind. Die Gelenke werden hierbei jeweils durch eine Materialverjüngung bzw. durch eine Schmalstelle im Material ausgebildet. Diese zwischen Hebel und verlagerbarem Element ausgebildeten Schmalstellen sind bevorzugt länger und dünner ausgebildet als die Schmalstellen des Parallelogramms, da die Verformungen höher sind.

Die Ausbildung der Gelenke als Materialverjüngungen bzw. Schmalstellen bewirkt, dass Vorspannungen und Setzungserscheinungen aus Bauteiltoleranzen verbundener Bauteile und durch Montagevorgänge verhindert werden.

Zwischen der ersten Untersetzungsstufe und der zweiten Untersetzungsstufe ist bevorzugt ein Exzenterantrieb angeordnet. Der Exzenterantrieb ist bevorzugt mit dem stationären Element der Positioniereinrichtung verbunden. Der Exzenterantrieb umfasst hierbei eine Exzenterwelle, die von dem Aktuator, insbesondere dem Schrittmotor unter Vermittlung der ersten Untersetzungsstufe angetrieben wird. Bevorzugt ist vorgesehen, dass auf der Exzenterwelle mittels Kugellagern eine Blattfeder gelagert ist, die den Hebel betätigt. Die unvermeidlichen Genauigkeitsabweichungen von Kugellagern wirken sich dann nur im Verhältnis der Hebellängen des Hebels auf die Genauigkeit der Feinpositioniereinrichtung aus.

Für die Steuerung der Positioniereinheit sind elektrische Kontakte von Vorteil, die als Endschalter dienen, um eine Referenzposition herzustellen. Bevorzugt sind diese Endschalter in Verlängerung des Hebels angebracht. Bei dieser Anordnung kann der Aktuator, insbesondere Schrittmotor frei durchdrehen. Es ist kein mechanischer Anschlag nötig. Somit muss die Dimensionierung des Exzenterantriebes lediglich auf den Verschiebewiderstand der Feinpositioniereinrichtung dimensioniert werden, und nicht auf das wesentlich größere Höchstdrehmoment des Motors. Alternativ können die Endschalter durch einen Mitnehmer auf der Exzenterwelle betätigt werden. Diese Anordnung ermöglicht eine genauere Referenzposition der Feinpositioniereinrichtung als die gezeigte Ausführung, bedingt allerdings einen mechanischen Anschlag des Exzenterantriebes.

Alternativ zur Ausbildung der Linearführung als Parallelogramm kann vorgesehen sein, dass die Linearführung zwei das verlagerbare und das stationäre Element miteinander verbindende Verbindungselemente aufweist, die jeweils als Kniehebel ausgebildet sind, die durch den die zweite Untersetzungsstufe ausbildenden Hebel synchron betätigbar sind.

Insbesondere kann der Hebel sich hierbei zwischen den zwei Verbindungselementen vom verlagerbaren Element zum stationären Element erstrecken und auf jeder Seite eine mit dem jeweiligen Verbindungselement zusammenwirkende Hebelbetätigung aufweisen, wobei der Hebel bevorzugt von einem Planetenradgetriebe der ersten Untersetzungsstufe zu Schwenkbewegungen antreibbar ist.

Eine Positioniereinrichtung für Raumfahrtanwendungen ist hierbei bevorzugt aus drei solchen Positioniereinrichtungen zusammengesetzt, die ein gemeinsames stationäres Element, ein gemeinsames verlagerbares Element und einen gemeinsamen Aktuator aufweisen, wobei der Aktuator von einem elektrischen Motor gebildet ist, der ein Planetenradgetriebe als erste Untersetzungsstufe antreibt, welches die Hebel der drei Positioniereinrichtungen synchron antreibt.

Die beschriebenen Positioniereinrichtungen stellen ein Grundelement dar, mit welchem eine einachsige Linearbewegung realisiert werden kann. Das Grundelement kann entweder gesondert als einachsige linear arbeitende Feinpositioniereinrichtung verwendet werden oder es können mehrere solcher Grundelemente miteinander in vielfältiger Weise kombiniert werden, um eine mehrachsige linear und/oder rotatorisch arbeitende Feinpositioniereinrichtung zu erhalten.

Eine typische Anwendung ist zum Beispiel ein Spiegelverstellmechanismus für Raumflugkörper, bei dem der Spiegel entlang einer Achse translatorisch verschoben und um zwei dazu rechtwinkelig angeordnete Achsen verdreht werden muss. Dazu wird die Spiegelebene an drei Punkten von drei der beschriebenen einachsigen Linear- Feinpositioniereinrichtungen gehalten. Gleichsinniges Betätigen der drei Linear-Feinpositioniereinrichtungen bewirkt eine Translation des Spiegels, unterschiedliches Betätigen der drei Linear-Feinpositioniereinrichtungen bewirkt ein Verkippen und ggf. Verschieben des Spiegels. Eine bevorzugte Ausbildung der Erfindung sieht in diesem Zusammenhang eine Vorrichtung zur dreiachsigen linearen und rotatorischen Feinpositionierung für Raumfahrtanwendungen vor, umfassend drei im Dreieck angeordnete Positioniereinrichtungen nach einem der Ansprüche 1 bis 7 oder 11, deren verlagerbare Elemente an eine zu positionierende Einheit anschließbar sind.

Die Translationsbewegungen dieser drei einzelnen Linear-Feinpositioniereinrichtungen müssen nicht zwingend gerade sein, sondern dürfen auch einen Verdrehanteil beinhalten, solange dieser wiederholbar ist. Auf diese Weise kann das Parallelogramm der Linearführung wesentlich masseärmer gestaltet werden.

Eine weitere bevorzugte Anwendung ist ein Spiegelverstellmechanismus für Raumflugkörper, bei dem der Spiegel entlang einer Achse verschoben werden muss, sowie um zwei dazu rechtwinkelig angeordnete Achsen verdreht und entlang dieser verschoben werden können muss. Die Ausführung erfolgt dann bevorzugt wie bei der dreiachsig linear/rotatorischen Ausführung gezeigt, wobei jedoch anstelle der Anbringung auf der Montageebene die Anbringung auf einem Bauteil erfolgt, das seinerseits auf zwei Linear-Feinpositioniereinrichtungen entlang zweier Achsen verschoben werden kann. Diese zwei Linear- Feinpositioniereinrichtungen sind dann mit der Montageebene verbunden.

Eine weitere Anwendung ist eine Positionierungseinrichtung, die eine Feinpositionierung in sechs Freiheitsgraden erlaubt. Die Ausführung erfolgt hierbei bevorzugt in der Art einer Stewart-Plattform, bei der die Anschlagpunkte der sechs einzelnen Streben des Hexapods mittels jeweiliger einachsiger Linear-Feinpostitioniereinrichtungen der erfindungsgemäßen Art in Strebenrichtung verstellbar sind.

Insbesondere ist hierbei erfindungsgemäß eine Vorrichtung zur mehrachsigen Feinpositionierung für Raumfahrtanwendungen vorgesehen, umfassend ein Hexapod, dessen sechs Antriebselemente von Positioniereinrichtungen nach Anspruch 10 gebildet sind.

Die Erfindung wird nachfolgend anhand von in der Zeichnung schematisch dargestellten Ausführungsbeispielen näher erläutert. In dieser zeigen
Fig. 1 ein Grundelement einer erfindungsgemäßen Feinpositioniereinrichtung mit einachsiger Linearbewegung in einer ersten Ausbildung,
Fig. 2 das Grundelement gemäß Fig. 1 in perspektivischer Ansicht im Schnitt,
Fig. 3 ein Grundelement einer erfindungsgemäßen Feinpositioniereinrichtung mit einachsiger Linearbewegung in einer zweiten Ausbildung,
Fig. 4 eine Feinpositioniereinrichtung mit einachsiger Linearbewegung aus drei Grundelementen gemäß Fig. 3,
Fig. 5 ein Grundelement gemäß Fig. 1, dessen Antrieb von einer Feinpositioniereinrichtung gemäß Fig. 4 gebildet ist,
Fig. 6 und 7 eine als Hexapod ausgebildete Feinpositioniereinrichtung, deren sechs Antriebselemente von Positioniereinrichtungen nach Fig. 4 gebildet sind.

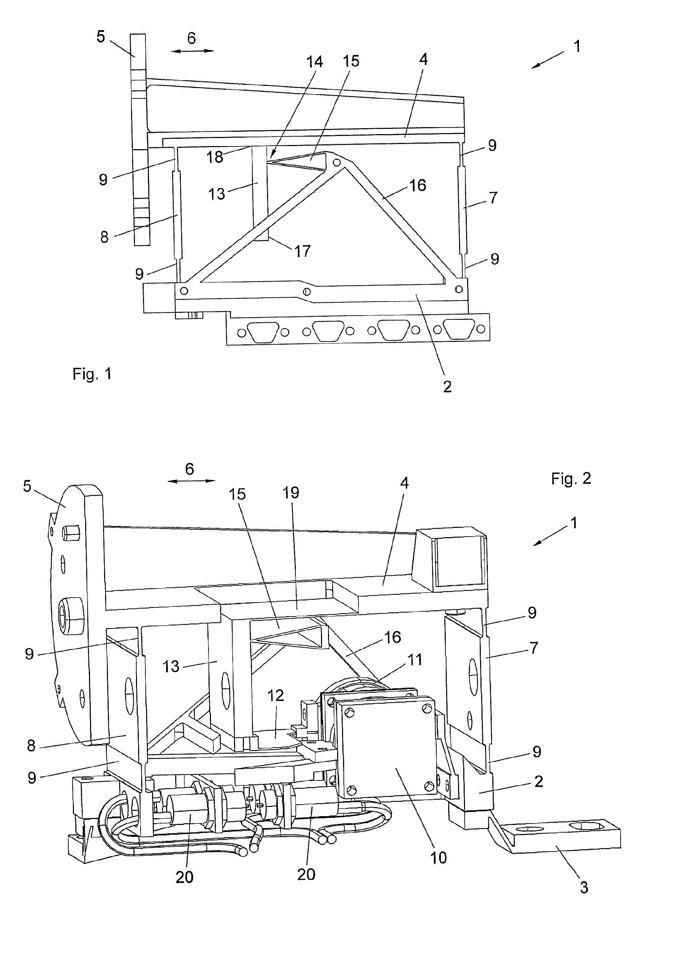

In den Fig. 1 und 2 ist ein Grundelement 1 einer Positioniereinrichtung für Raumfahrtanwendungen dargestellt, welches eine einachsige Linearbewegung ausführen kann. Das Grundelement 1 umfasst ein stationäres Element 2, welches mittels Montageplatten 3 an einem ortsfesten Bauteil eines Raumflugkörpers befestigt werden kann. Weiters ist ein relativ zum stationären Element 2 linear verlagerbares Element 4 vorgesehen, welches eine Montageplattform 5 für das zu positionierende Bauteil des Raumflugkörpers, wie z.B. einen Spiegel eines optischen Instruments, aufweist. Das verlagerbare Element 4 ist mittels einer Linearführung translatorisch geführt, sodass es eine einachsige Linearbewegung in Richtung des Doppelpfeils 6 ausführen kann. Die Linearführung umfasst bei der in Fig. 1 dargestellten Ausbildung ein erstes stab- oder plattenförmiges Verbindungselement 7 und ein zweites stab- oder plattenförmiges Verbindungselement 8, welche das verlagerbare Element 4 und das stationäre Element 2 miteinander verbinden. Dabei bilden die Verbindungselemente 7 und 8 mit dem stationären Element 2 und dem verlagerbaren Element 4 ein Parallelogramm, welches die Linearführung in Richtung des Doppelpfeils 6 gewährleistet. Die Verbindungselemente 7 und 8 sind einerseits mit dem verlagerbaren Element 4 und andererseits mit dem stationären Element 2 über als Materialverjüngung 9 ausgebildete, einen Freiheitsgrad aufweisende Gelenke einstückig verbunden.

Zum Antreiben der Linearbewegung entlang des Doppelpfeils 6 ist ein elektrischer Schrittmotor vorgesehen, der über ein Untersetzungsgetriebe mit dem verlagerbaren Element 4 zusammenwirkt. Das Untersetzungsgetriebe umfasst ein Planetenradgetriebe 10, welches die erste Untersetzungsstufe ausbildet und vorzugsweise unmittelbar von dem Schrittmotor angetrieben wird. Das Planetenradgetriebe 10 treibt eine Exzenterwelle mit Kugellager 11 an. Am Kugellagergehäuse ist eine Blattfeder 12 befestigt, deren dem Kugellagergehäuse abgewandtes Ende mit einem Hebel 13 zusammenwirkt. Der Hebel 13 bildet die zweite Untersetzungsstufe des Untersetzungsgetriebes und ist um ein Gelenk 14 schwenkbar gelagert. Das Gelenk 14 ist hierbei von einer Schmalstelle im Material des einstückig mit dem Gelenkträger 15 ausgebildeten Hebels 13 gebildet. Das Gelenk 14 bzw. der Gelenkträger 15 ist über eine Verstrebung 16 am stationären Element 2 angeordnet. Die Blattfeder 12 greift an dem mit 17 bezeichneten Ende des Hebels 13 an. Am gegenüberliegenden Ende 18 des Hebels 13 wirkt dieser mit dem verlagerbaren Element 4 zusammen, und zwar über eine Materialverjüngung 19, welche ein Gelenk zwischen dem Hebel 13 und dem verlagerbaren Element 4 ausbildet. Der Hebel 13 ist somit einstückig mit dem verlagerbaren Element 4 ausgeführt.

Insgesamt sind somit das stationäre Element 2, das verlagerbare Element 4, die Linearführung (Verbindungselemente 7 und 8) und der Hebel 13 monolithisch aus einem Stück Rohmaterial hergestellt. Die Herstellung erfolgt bevorzugt durch Fräsen und Drahterodieren aus einem Materialblock. Das stationäre Element 2, das verlagerbare Element 4, die Linearführung (Verbindungselemente 7 und 8), der Hebel 13 und die Blattfeder 12 des Exzenterantriebs sind aus demselben Material, insbesondere Invar 36 hergestellt, um Thermaldehnungen zu minimieren.

Am Hebel 13 kann nach unten hin eine Verlängerung (nicht dargestellt) angebracht sein, die zwischen den beiden Näherungssensoren oder elektrischen Schaltern 20 angeordnet ist und mit diesen zusammenwirkt, um die Endposition des Hebels 13 und damit der Positioniereinrichtung zu detektieren.

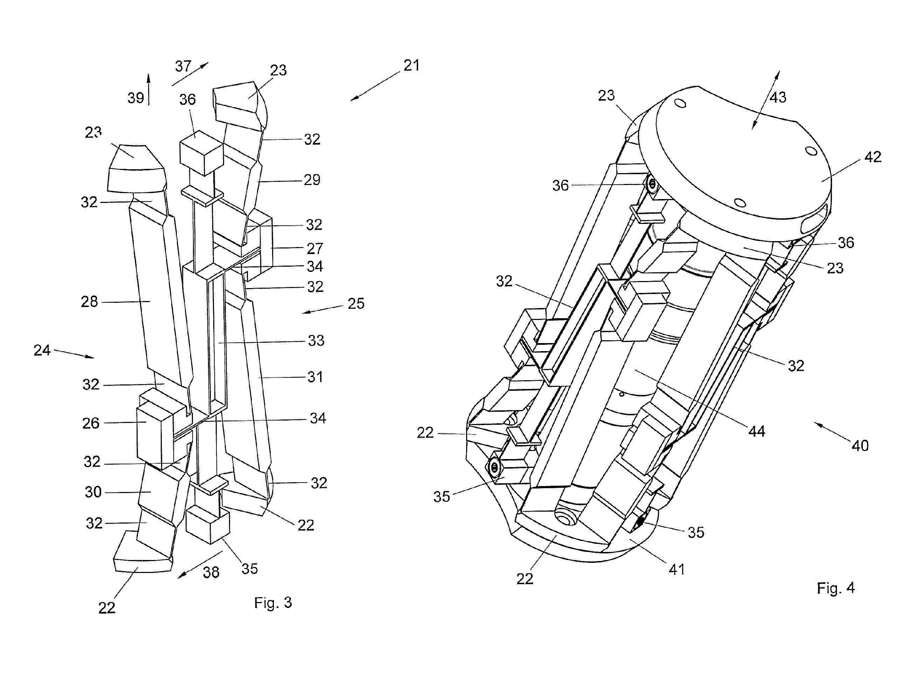

Fig. 3 zeigt eine alternative Ausbildung eines Grundelements 21 einer Positioniereinrichtung für Raumfahrtanwendungen, welches eine einachsige Linearbewegung ausführen kann. Das Grundelement 21 umfasst wiederum ein stationäres Element 22 und ein verlagerbares Element 23, die im vorliegenden Fall jeweils aus zwei Teilstücken bestehen. Die jeweiligen Teilstücke können an einer gemeinsamen stationären bzw. verlagerbaren Plattform befestigt sein. Weiters sind zwei das verlagerbare Element 23 und das stationäre Element 22 miteinander verbindende Verbindungselemente 24 und 25 vorgesehen, die jeweils als Kniehebel ausgebildet sind. Der Kniehebel 24 und der Kniehebel 25 bestehen jeweils aus zwei um ein Gelenkstück 26,27 einachsig schwenkbare Arme 28,29 und 30,31. Die Arme 28,29 und 30,31 sind jeweils einstückig mit dem Gelenkstück 26,27 und dem stationären Element 22 bzw. dem verlagerbaren Element 23 ausgebildet, wobei die Verbindung über als Materialverjüngung ausgebildete Gelenke 32 realisiert ist.

Die Kniehebel 24 und 25 sind durch einen Hebel 33 betätigbar, der sich zwischen den zwei Verbindungselementen 24,25 erstreckt und auf jeder Seite eine mit dem jeweiligen Verbindungselement 24,25 zusammenwirkende Hebelbetätigung 34 aufweist. Die Hebelbetätigung 34 ist einstückig mit dem Hebel 33 ausgebildet und ist von einem plattenartigen seitlichen Fortsatz gebildet, der in eine schlitzartige Aufnahme des Gelenkstücks 26 bzw. 27 eintaucht. Der Hebel 33 ist an seinen Endstücken 35,36 schwenkbar gelagert. Wenn der Hebel 33 an seinen Endstücken 35,36 gegensinnig (im Sinne der Pfeile 37,38) ausgelenkt wird, werden die Gelenkstücke 26,27 über die Kniehebelbetätigungsstücke 34 auseinander gedrückt, wodurch die Kniehebel 24 und 25 betätigt werden und das verlagerbare Element 23 relativ zum stationären Element 22 in Richtung des Pfeils 39 linear bewegt wird. Der Hebel 33 wird bevorzugt von einem Planetenradgetriebe zu Schwenkbewegungen angetrieben.

Das in Fig. 3 gezeigte Grundelement 21 kann mit weiteren gleichbauenden Grundelementen 21 kombiniert werden.. Fig. 4 zeigt eine Positioniereinrichtung 40 umfassend eine Kombination von drei Grundelementen 21. Die Positioniereinrichtung 40 umfasst eine stationäre Plattform 41 und eine gemäß dem Doppelpfeil 43 einachsig linear verlagerbare Plattform 42. Die Plattformen 41 und 42 haben im Wesentlichen kreisförmigen Umriss und spannen zwischen sich einen im Wesentlichen zylinderförmigen Raum auf, dessen Zylinderachse in Richtung des Doppelpfeils 43 verläuft. Zwischen den Plattformen 41 und 42 sind in Bezug auf die Zylinderachse in Umfangsrichtung gleichmäßig verteilt drei Grundelemente 21 angeordnet. Die stationären Elemente 22 der Grundelemente 21 sind hierbei an der stationären Plattform 41 befestigt. Die verlagerbaren Elemente 23 der Grundelemente 21 sind an der verlagerbaren Plattform 42 befestigt. Radial innerhalb der drei Grundelemente 21 ist eine Antriebseinheit 44 angeordnet, die wenigstens einen Schrittmotor und zugeordnete Planetenradgetriebe umfasst. Die Planetenradgetriebe treiben die Endstücke 35,36 der drei Hebel 32 synchron an, wobei die Endstücke 35 gegensinnig zu den Endstücken 36 angetrieben werden. Auf diese Weise arbeiten die drei Grundelemente 21 im Sinne einer einachsig linearen Bewegung der verlagerbaren Plattform 42 im Sinne des Doppelpfeils 43 zusammen. Dadurch kann der Abstand zwischen den Plattformen 41 und 42 eingestellt werden.

Die Positioniereinrichtung 40 gemäß Fig. 4 wird im Folgenden auch als "Nano-Strut" bezeichnet, dessen Länge wie oben beschrieben fein verstellt werden kann.

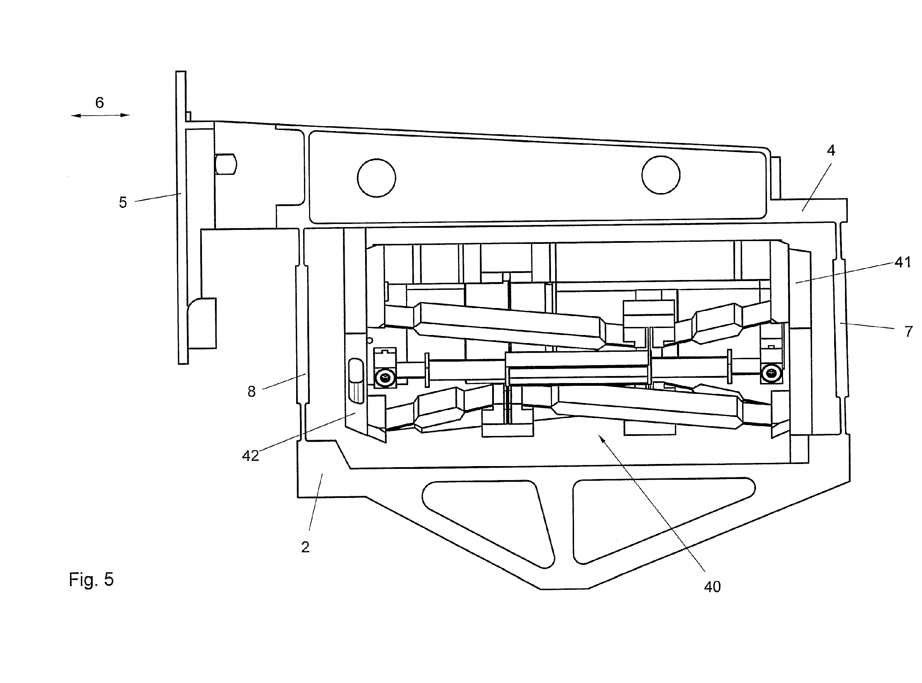

Das Grundelement 21 gemäß Fig. 3 und das Nano-Strut 40 zeichnen sich so wie das Grundelement 1 (Fig. 1 und 2) durch ein zweistufiges Untersetzungsgetriebe aus, wobei die erste Stufe vorzugsweise von einem von einem Schrittmotor angetriebenen Planetenradgetriebe und die zweite Stufe von einem Hebel (Hebel 13) bzw. von einem 2-Hebel-System (Kniehebel 24,25 gemeinsam mit Hebel 32) gebildet ist. Die beiden Ausbildungen lassen sich aber auch kombinieren. So zeigt Fig. 5 ein Grundelement 1 gemäß Fig. 1, bei dem die erste Untersetzungsstufe des Untersetzungsgetriebes von einem Nano-Strut 40 ersetzt ist. Das Nano-Strut 40 wirkt hierbei unmittelbar mit dem verlagerbaren Element 4 des Grundelements zusammen. Insbesondere' ist die stationäre Plattform 41 des Nano-Strut 40 mit dem stationären Element 2 des Grundelements 1 und die verlagerbare Plattform 42 des Nano-Strut 40 mit dem verlagerbaren Element 4 des Grundelements verbunden.

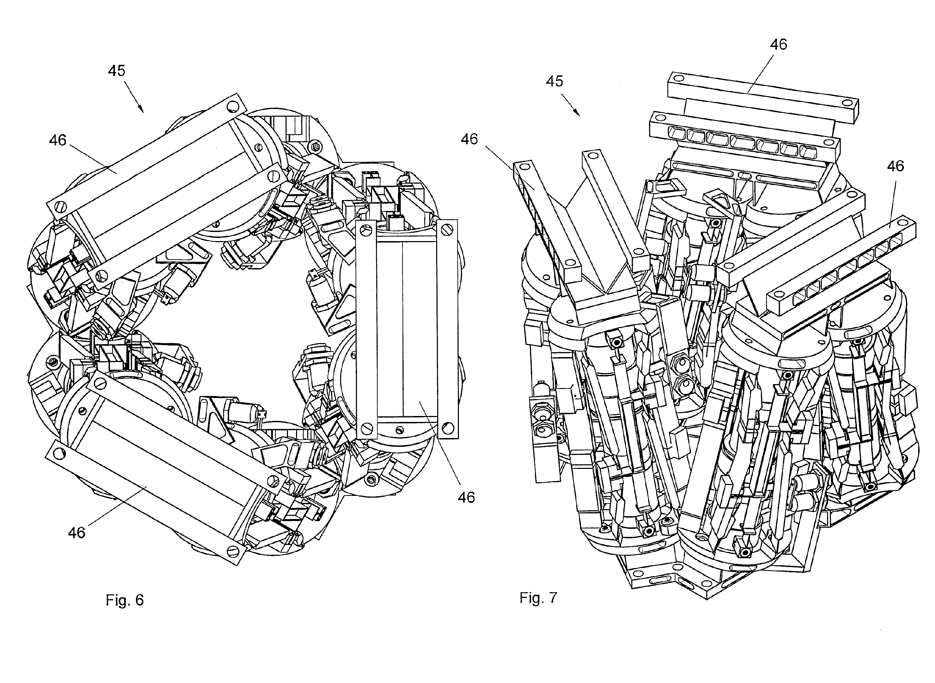

Fig. 6 zeigt eine Draufsicht und Fig. 7 eine perspektivische Ansicht einer als Hexapod ausgebildeten Feinpositioniereinrichtung 45, deren sechs Antriebselemente von Nano-Struts 40 nach Fig. 4 gebildet sind. Ein solches Hexapod ermöglicht eine sechsachsige Verstellung einer mit den Montageelementen 46 befestigten Plattform, wenn alle sechs Streben von verstellbaren Nano-Struts 40 gebildet sind. Durch Ersatz einzelner Nano-Struts durch Stützstreben konstanter Länge können weiters 5-achsige, 4-achsige, 3-achsige und 2-achsige Feinpositioniereinrichtungen hergestellt werden.

Die in den Ausführungsbeispielen beschriebenen Ausbildungen haben zusammengefasst die folgenden Vorteile:
- Hochgenaue Verstellmöglichkeit durch elektrischen Antrieb im sub-Mikrometer / sub-Winkelsekunden - Bereich: Die Schrittweite des Schrittmotors wird durch das Planetengetriebe reduziert, auf den/die Hebel übertragen und dieser reduziert die Schrittweite abermals um das Verhältnis seiner Hebellängen um den Drehpunkt.
- Halten und wiederholbares Erreichen von zuvor angefahrenen Positionen mit hoher Genauigkeit:
   - Die Parallelogrammführung und der Hebel sind spielfrei ausgeführt. Die Gelenke werden durch Schmalstellen im Material ausgebildet.
   - Die Parallelogrammführung und der Hebel sind monolithisch aus einem Stück Rohmaterial hergestellt, um Vorspannungen und Setzungserscheinungen aus Bauteiltoleranzen verbundener Bauteile und durch Montagevorgänge zu verhindern.
   - Die unvermeidlichen Genauigkeitsabweichungen von Kugellagern wirken sich nur im Verhältnis der Hebellängen des Hebels auf die Genauigkeit der Feinpositioniereinrichtung aus.
- Halten der Positionen unter Startlast des Satelliten: Die dynamischen Lasten in Verstellrichtung der Feinpositioniereinrichtung werden über den/die Hebel, über das Planetengetriebe auf den Schrittmotor mit hohem Haltemoment übertragen. Dabei reduziert das Planetengetriebe das notwendige Haltemoment unter das vorhandene Haltemoment des Schrittmotors, sodass keine weitere Vorrichtung zum Halten der Position unter Startlast des Satelliten notwendig ist.

- Halten der Positionen ohne elektrische Leistungsaufnahme: Das Rückstellmoment aus der Verformung des Parallelogramms und des Hebels werden über den/die Hebel, über das Planetengetriebe auf den Schrittmotor mit hohem Haltemoment übertragen. Dabei reduziert das Planetengetriebe das notwendige Haltemoment unter das vorhandene Haltemoment des Schrittmotors, sodass die Position der Feinpositioniereinrichtung stromlos ohne elektrische Leistungsaufnahme gehalten wird.
- Keine Einschränkung hinsichtlich der möglichen Positionen der Feinpositioniereinrichtung während des Starts des Satelliten: Unabhängig von der eingestellten Position der Feinpositioniereinrichtung reicht das Haltemoment des Schrittmotors zusammen mit dem hohen Übersetzungsverhältnis des Getriebes und des Hebels aus, um auch unter den auftretenden mechanischen Lasten des Raketenstarts ein Verstellen der eingestellten Position zu verhindern.
- Präzise Indikation von Referenzpositionen durch elektrische Kontakte:
   - In der gezeigten Ausführung sind diese Endschalter in Verlängerung des Hebels angebracht. Die unvermeidlichen Genauigkeitsabweichungen der elektrischen Kontakte wirken sich lediglich im Verhältnis der Hebellängen des Hebels um seinen Drehpunkt auf die Genauigkeit der Referenzposition der Feinpositioniereinrichtung aus.
   - Alternativ können die Endschalter durch einen Mitnehmer auf der Planetenradgetriebeabtriebswelle betätigt werden. Die unvermeidlichen Genauigkeitsabweichungen der elektrischen Kontakte wirken sich dann lediglich im Verhältnis der Hebellängen des Hebels und weiters im Verhältnis des Exzenterradius zum Mitnehmerradius auf die Genauigkeit der Referenzposition der Feinpositioniereinrichtung aus. Diese Anordnung ermöglicht eine noch genauere Indikation der Referenzposition der Feinpositioniereinrichtung als die gezeigte Ausführung.
- Geringe Thermalverformung: Die Linearführung gemeinsam mit dem Hebel sowie die Blattfeder des Exzenterantriebs sind aus Invar 36 hergestellt, um Thermaldehnungen zu minimieren. Weiters sind die Verbindungspunkte vom Exzenterantrieb zum ortsfesten Teil des Parallelogramms und die Verbindungspunkte vom Exzenterantrieb zur Blattfeder in Verschieberichtung in gleicher Lage, sodass sich Thermaldehnungen des Exzenterantriebs weitgehend kompensieren.
- Geringe Masse aufgrund:
   - direkter Lastpfade,
   - einstückiger Ausführung der strukturtragenden Teile wie Parallelogramm und Hebel,
   - im Falle der Betätigung der Endschalter durch den Hebel: Der Schrittmotor kann frei durchdrehen, es gibt keinen mechanischen Anschlag und es muss kein Element auf das Höchstdrehmoment des Motors dimensioniert werden.
- Hohe Steifigkeit und hohe Eigenfrequenz aufgrund:
   - direkter Lastpfade,
   - Steifigkeit des Exzentertriebes durch den Hebel.
   - Geringe durch Temperaturänderung hervorgerufene Kraft- und Momenteneinleitung in die Montagefläche, typischerweise eine optische Bank, aufgrund der radial biegeweichen Füße.
   - Verwendung von für die Raumfahrt zugelassenen Materialien: Es werden ausschließlich für die Raumfahrt zugelassene und seit Jahren erfolgreich verwendete Materialsorten eingesetzt.
   - Geringe Fertigungskosten aufgrund geringer Teilezahl.
   - Die für die Herstellung verwendeten Prozesse müssen beherrscht und prüfbar sein: Es werden ausschließlich für die Raumfahrt zugelassene und seit Jahren erfolgreich verwendete Prozesse eingesetzt. Es sind keine neuartigen Prozesse nötig.
   - Die mechanischen und elektrischen Sicherheiten müssen mit etablierten Berechnungsmethoden nachweisbar sein:
      - Der mechanische Nachweis kann vollständig durch Finite Elemente Rechnung erfolgen.
   - Sämtliche elektrischen Elemente, wie Motor und Endschalter, sind elektrisch redundant ausgeführt.

## Patentansprüche

1. Positioniereinrichtung für Raumfahrtanwendungen umfassend ein stationäres Element, ein relativ dazu linear verlagerbares Element und eine Linearführung zum translatorischen Führen des verlagerbaren Elements, wobei die Linearführung wenigstens ein das verlagerbare und das stationäre Element miteinander verbindendes Verbindungselement aufweist, das einerseits mit dem verlagerbaren Element und andererseits mit dem stationären Element über ein als Materialverjüngung ausgebildetes, einen Freiheitsgrad aufweisendes Gelenk einstückig verbunden ist, wobei ein Aktuator zum Antreiben des verlagerbaren Elements vorgesehen ist, der über ein Untersetzungsgetriebe mit dem verlagerbaren Element zusammenwirkt, **dadurch gekennzeichnet, dass** das Untersetzungsgetriebe wenigstens eine erste Untersetzungsstufe und eine zweite Untersetzungsstufe umfasst, wobei die zweite Untersetzungsstufe einen schwenkbaren Hebel (13,33) umfasst.

2. Positioniereinrichtung nach Anspruch 1, **dadurch gekennzeichnet, dass** die erste Untersetzungsstufe von einem Planetenradgetriebe (10) gebildet ist.

3. Positioniereinrichtung nach Anspruch 1 oder 2, **dadurch gekennzeichnet, dass** die Linearführung zwei das verlagerbare (4,23) und das stationäre Element (2,22) miteinander verbindende Verbindungselemente (7,8,24,25) aufweist, die gemeinsam mit dem verlagerbaren Element (4,23) und dem stationären Element (2,22) ein Parallelogramm ausbilden.

4. Positioniereinrichtung nach Anspruch 3, **dadurch gekennzeichnet, dass** das Parallelogramm in der unverformten Stellung der Gelenke ein Rechteck ist.

5. Positioniereinrichtung nach einem der Ansprüche 1 bis 4, **dadurch gekennzeichnet, dass** der Hebel (13, 33) um ein als Materialverjüngung ausgebildetes Gelenk (14) schwenkbar gelagert ist.

6. Positioniereinrichtung nach einem der Ansprüche 1 bis 5, **dadurch gekennzeichnet, dass** die Linearführung und der Hebel (13,33) monolithisch aus einem Stück Rohmaterial bevorzugt durch Fräsen und Drahterodieren hergestellt sind.

7. Positioniereinrichtung nach einem der Ansprüche 1 bis 6, **dadurch gekennzeichnet, dass** zwischen der ersten Untersetzungsstufe und der zweiten Untersetzungsstufe ein Exzenterantrieb angeordnet ist.

8. Positioniereinrichtung nach Anspruch 1 oder 2, **dadurch gekennzeichnet, dass** die Linearführung zwei das verlagerbare (4,23) und das stationäre (2,22) Element miteinander verbindende Verbindungselemente (7,8,24,25) aufweist, die jeweils als Kniehebel ausgebildet sind, die durch den die zweite Untersetzungsstufe ausbildenden Hebel (13,33) synchron betätigbar sind.

9. Positioniereinrichtung nach Anspruch 8, **dadurch gekennzeichnet, dass** der Hebel (13,33) sich zwischen den zwei Verbindungselementen (7,8,24,25) vom verlagerbaren Element (4,23) zum stationären Element (2,22) erstreckt und auf jeder Seite eine mit dem jeweiligen Verbindungselement (7,8,24,25) zusammenwirkende Hebelbetätigung (34) aufweist, wobei der Hebel (13,33) bevorzugt von einem Planetenradgetriebe (10) der ersten Untersetzungsstufe zu Schwenkbewegungen antreibbar ist.

10. Positioniereinrichtung für Raumfahrtanwendungen aus einer Kombination von drei Positioniereinrichtungen nach Anspruch 8 oder 9, die ein gemeinsames stationäres Element (2,22), ein gemeinsames verlagerbares Element (4,23) und einen gemeinsamen Aktuator aufweisen, wobei der Aktuator von einem elektrischen Motor gebildet ist, der ein Planetenradgetriebe (10) als erste Untersetzungsstufe antreibt, welches die Hebel (13,33) der drei Positioniereinrichtungen synchron antreibt.

11. Positioniereinrichtung nach einem der Ansprüche 1 bis 7, **dadurch gekennzeichnet, dass** als erste Untersetzungsstufe eine Positioniereinrichtung nach Anspruch 10 vorgesehen ist, die den schwenkbaren Hebel (13,33) der zweiten Untersetzungsstufe antreibt.

12. Vorrichtung zur dreiachsigen linearen und rotatorischen Feinpositionierung für Raumfahrtanwendungen umfassend drei im Dreieck angeordnete Positioniereinrichtungen nach einem der Ansprüche 1 bis 7 oder 11, deren verlagerbare Elemente (4,23) an eine zu positionierende Einheit anschließbar sind.

13. Vorrichtung zur mehrachsigen Feinpositionierung für Raumfahrtanwendungen umfassend ein Hexapod, dessen sechs Antriebselemente von Positioniereinrichtungen nach Anspruch 10 gebildet sind.
